# EUROPEAN PATENT APPLICATION

(11) **EP 1 547 816 A2**
(43) Date of publication of application: **29.06.2005**
(21) Application number: 04024944.3
(22) Date of filing: 20.10.2004
(51) Int. Cl.: B60C 9/00, B60C 9/08

(54) **Steel cord having ultrafine steel filaments to reinforce tire carcass and radial tire for passenger car using the same**

(30) Priority: 23.12.2003 KR 2003095088
(71) Applicant: Hongduk Steel Cord Co., Ltd., Pohang, Kyungsangbuk-Do (KR); Kumho Tire Co., Inc., Kwangju (KR)
(72) Inventor: Lee, Byung-Ho, Pohang Kyungsangbuk-Do (KR); Lim, Seung-Ho R&D Center of Kiswire Ltd., Kyungsangbuk-Do (KR); Sin, Sung-Ho, Daegu (KR); Sohn, Bong-Young, Poongam-Dong Seo-ku, Kwangju (KR); Kim, Seok-Ho, Kwangju (KR); Lim, Dong-Min, Kwangsan-Ku Kwangju (KR)
(74) Representative: Pohlmann, Eckart, Dipl.-Phys.

(57) **Abstract**

The object of this invention is to provide a steel cord, which has ultrafine steel filaments with a diameter of 0.04 - 0.14 mm stranded with each other so as to reinforce a tire carcass, and a radial tire for a passenger car using the same. The steel cord includes one core filament with a diameter of 0.04 - 0.14 mm and 4 - 7 sheath filaments, each having a diameter of 0.04 - 0.14 mm, spirally stranded around the core filament. At this time, the steel cord has a diameter of 0.2 - 0.5 mm and shear strength of 25 - 35 kgf. Additionally, each of the sheath filaments has a smaller diameter than the core filament, and the core filament and the sheath filaments are made of the steel filaments. The radial tire includes the tire carcass provided with the steel cord and a topping sheet, and the steel cord is embedded in the topping sheet such that a rubber gauge ratio is 200 - 500 % and a rubber clearance ratio is 60 - 250 %. The steel cord has improved physical properties, such as shear strength and durability, to reduce a thickness of a carcass including the steel cord, leading to the reduction of a weight of the radial tire. Furthermore, controlling stability and durability of the radial tire are improved, thereby reducing costs of maintenance of the passenger car.

## Description

### BACKGROUND OF THE INVENTION

### 1. Field of the invention

The present invention pertains, in general, to a steel cord having ultrafine steel filaments to reinforce a tire carcass, and a radial tire for a passenger car using the same. More particularly, the present invention relates to a steel cord having ultrafine steel filaments to reinforce a tire carcass, which has a 1+n structure that the steel filaments constituting the steel cord come into contact with each other in a line contact manner instead of a spot contact manner and a rubber for a tire comes into contact with a core filament. At this time, a plurality of ultrafine steel filaments, each having a diameter of 0.14 mm or less, are stranded such that a diameter of the steel cord is 0.2 - 0.5 mm, and the resulting steel cord is applied to the tire carcass. Furthermore, the present invention relates to a radial tire for a passenger car using the steel cord, which includes the tire carcass. In this regard, the tire carcass has the steel cord and a topping sheet, and the steel cord is embedded in the topping sheet so that a rubber gauge ratio is 200 - 500 % and a rubber clearance ratio is 60 - 250 %.

### 2. Description of the Prior Art

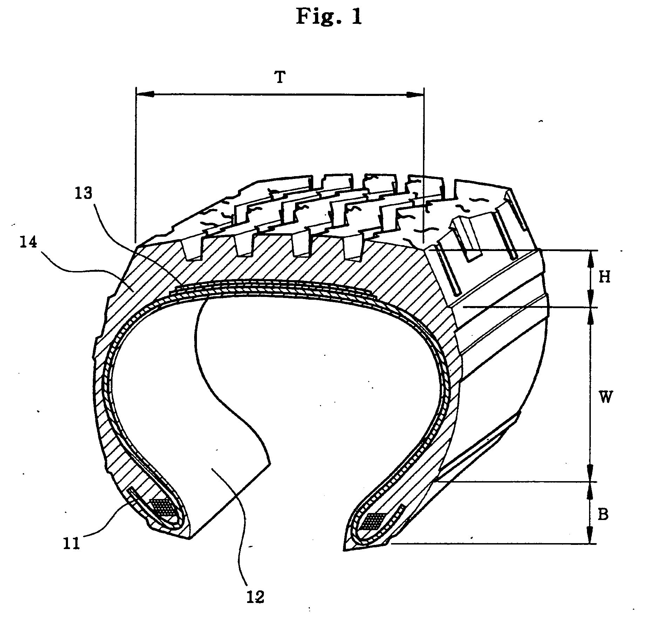

Having no tube for air injection use, a radial tire includes a carcass 11 as a frame, an inner liner 12 attached to an inner surface of the carcass 11, and a belt layer 13 and a rubber layer 14 sequentially attached to an outer surface of the carcass 11 as shown in FIG. 1. At this time, a tire cord fabric, having a bowl-shaped section which is convex at both sides thereof, forms a ring in the carcass 11. Additionally, the radial tire may be divided into a tread (T), a shoulder (H), a sidewall (W), and a bead (B) according to positions of parts thereof.

The tread (T) comes into direct contact with a road surface. Further, the sidewall (W) constituting a side of the radial tire functions to protect the carcass 11, and is easily flexed and extended to improve driving comfort. Furthermore, the shoulder (H) serves to connect the tread (T) to the sidewall (W), and is the thickest part of the radial tire.

As well, the bead (B) is positioned below the sidewall (W), and comes into contact with a rim corresponding to an outer circumference of a wheel on which the radial tire is mounted. In this regard, the bead (B) of the radial tire is mounted on the rim while ends of the tire cord fabric constituting the carcass 11 being rolled.

Interposed between the tread (T) consisting of the rubber layer, and the carcass 11, the belt layer 13 contributes to reducing impact while driving, and simultaneously preventing cracking and damage of the tread (T) from directly affecting the carcass 11. Additionally, the inner liner 12 attached to the inner surface of the carcass 11 acts as the tube for containing air therein.

The carcass 11 acting as the frame of the radial tire includes two topping sheets made of a rubber, which are attached to each other. At this time, the carcass 11 may include one carcass ply in which one reinforcing cord is interposed between the two topping sheets, or a plurality of carcass plies. In the case of a radial tire for a truck or bus, the steel cord is applied as a reinforcing material to the belt layer 13 as well as the carcass 11. On the other hand, in the case of a radial tire for a passenger car, the steel cord is applied as a reinforcing material to only the belt layer 13, and a cord made of a synthetic fiber, such as polyester, nylon, or rayon, is applied to the carcass.

Accordingly, in the case of a radial tire for a large truck or bus, the carcass constituting the radial tire has excellent stability against external impact. However, in the case of a radial tire for a passenger car, which adopts the carcass including the synthetic fiber cord in order to improve driving comfort, the stability against external impact is poor in comparison with the radial tire for large trucks or buses.

Compared to the steel cord, the synthetic fiber cord applied to the carcass of the radial tire has disadvantages in that significant heat is generated when the synthetic fiber cord is elongated and compressed by flexion of the radial tire, an attachment force between the synthetic fiber cord and a rubber coat surrounding the synthetic fiber cord is relatively low, the rubber coat is easily torn, and physical properties, such as strength, of the synthetic fiber cord are inevitably degraded due to heat generated during driving.

When heat is generated in driving due to the repeated flexion and extension of the radial tire and friction between the radial tire and the road surface, the steel cord is hardly deformed by heat. However, in the case of rayon, polyester, and nylon used in the synthetic fiber cord, rayon and polyester shrink 2 - 4 % at 100°C, and nylon shrinks 6 - 8 % at the same temperature, leading to dimensional deformation of the radial tire while driving, and thus, the synthetic fiber cord may be easily damaged by a relatively weak impact. Additionally, the radial tire adopting the synthetic fiber cord may be torn because of a standing wave caused by relatively low strength of the synthetic fiber cord during high-speed driving.

As for rayon, it is very undesirable in view of pollution, and its physical properties are significantly degraded by exposure to water. Additionally, synthetic fiber filaments constituting the synthetic fiber cord each have a very small diameter of tens of micrometers or less, and thus, the synthetic fiber cord has relatively low flexion strength. Accordingly, the radial tire for the passenger car, which adopts only the synthetic fiber cord, has poor strength at a side thereof, and thus, the side of the radial tire is easily torn by external impact. Furthermore, because flexion strength and compression strength of the radial tire adopting only the synthetic fiber cord are very low in comparison with the case of radial tires adopting steel cords, the side of the radial tire including only the synthetic fiber cord has poor physical properties, thereby reducing controlling stability of the radial tire.

To avoid the above disadvantages of the synthetic fiber cord, the steel cord may be used instead of the synthetic fiber cord, due to advantages of excellent stability, thermal conductivity, and elasticity, and relatively low dynamic energy loss. However, when only steel cord is used instead of synthetic fiber cord, weight reduction of the radial tire cannot be accomplished because of a relatively high weight of the steel cord, thus reducing fuel efficiency of the passenger car. Furthermore, the steel cord has the following disadvantages.

In detail, material fatigue of the steel cord used in the carcass may be quickly increased due to repeated flexion and compression of the tire while driving, and strength of the steel cord may be reduced because of a fretting phenomenon of the steel cord caused by a friction between steel filaments constituting the steel cord. Furthermore, the steel cord has higher flexion strength than the synthetic fiber cord, and thus, it has relatively high strength at a side thereof but is sensitive to vibration caused by contact between the tire and the road surface, thereby reducing driving comfort.

In other words, even though the use of the steel cord in the carcass of radial tires for passenger cars brings about improved controlling stability of the radial tire and reduced rotation resistance of the radial tire, the driving comfort is reduced when the radial tire including the steel cord is applied to the passenger car because of the relatively high flexion strength of the steel cord.

Recently, many studies have been conducted to develop a steel cord, which has improved fatigue resistance and durability by changing a diameter or strength of a steel filament applied to a cord for a carcass. With respect to this, Japanese Pat. Laid-Open Publication No. Sho. 58-221703 discloses a radial tire, which includes a carcass having a steel cord comprised of ultrafine filaments with a diameter of 0.08 - 0.15 mm. However, the above patent is disadvantageous in that the steel cord has a 3X3 multiple strand structure, which is produced by stranding three fine filaments to form a strand and stranding three strands, thus increasing a diameter of the steel cord even though the fine filaments are used to produce the steel cord. In this respect, the fine filaments come into contact with each other in a spot contact manner, leading to a fretting phenomenon, thereby reducing durability of the radial tire.

To avoid the above disadvantages, such as the fretting phenomenon caused by a spot contact between the fine filaments due to the 3X3 multiple strand structure of the steel cord, Japanese Pat. Laid-Open Publication No. Sho. 62-137202 discloses a steel cord having a single strand structure including 1 - 5 steel filaments with a diameter of 0.15 - 0.25 mm. However, Japanese Pat. Laid-Open Publication No. Sho. 62-137202 has disadvantages in that it is difficult to apply the steel cord to the carcass of radial tires for passenger cars because of poor fatigue resistance due to a relatively large diameter of each steel filament, and that an attachment force between the steel cord and rubber is relatively low because the rubber has insufficient contact with the steel cord.

### SUMMARY OF THE INVENTION

Therefore, the present invention has been made keeping in mind disadvantages occurring when an synthetic fiber cord is used to reinforce a tire carcass of a radial tire for a passenger car, and an object of the present invention is to provide a steel cord having ultrafine steel filaments to reinforce a tire carcass, and a radial tire for a passenger car using the same. In this regard, the steel cord with a diameter of 0.5 mm or less, which is produced using the ultrafine steel filaments, is applied to the tire carcass to prevent a weight of the radial tire from being increased. Additionally, a diameter of a sheath filament constituting the steel cord is adjusted to be smaller than a core filament constituting the steel cord to enable rubber to desirably come into contact with the steel cord and simultaneously suppress a fretting phenomenon, thereby improving fatigue resistance and durability of the radial tire for high-speed driving without reducing strength of the radial tire in comparison with a conventional radial tire.

The above object can be accomplished by providing a steel cord for reinforcing a tire carcass, which has a 1+n structure including a plurality of ultrafine steel filaments with a diameter of 0.14 mm or less stranded with each other, and which is embedded in a topping sheet according to a predetermined pattern.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a partial sectional view of a radial tire; and
FIG. 2 is a sectional view of a topping sheet.

### DETAILED DESCRIPTION OF THE INVENTION

Reference now should be made to the drawings, in which the same reference numerals are used throughout the different drawings to designate the same or similar components.

A steel cord having ultrafine steel filaments to reinforce a tire carcass according to the present invention is produced by stranding a plurality of ultrafine steel filaments and has a diameter of 0.2 - 0.5 mm or less. In this regard, the steel cord for reinforcing the tire carcass is characterized in that its strength is much higher than that of a synthetic fiber cord, it is scarcely deformed by heat, and it has almost the same flexibility as the synthetic fiber cord because it includes the ultrafine steel filaments. Furthermore, the steel cord is embedded in the tire carcass according to a predetermined pattern, and applied to produce a radial tire for a passenger car according to the present invention.

In this respect, the diameter of the steel cord of the present invention is adjusted to 0.5 mm or less so as to reduce a weight of the tire carcass including the steel cord and simultaneously prevent fatigue resistance of the steel cord and driving comfort from being reduced when the steel cord is used instead of a conventional rayon cord with a diameter of 0.6 - 0.8 mm and a unit weight of 0.2 - 0.4 g/m. Additionally, when the diameter of the steel cord is less than 0.2 mm, it is difficult to draw and strand the steel filaments, and shear strength of the steel cord is reduced. Hence, it is preferable that the minimum diameter of the steel cord be 0.2 mm.

Further, the steel cord according to the present invention must be embedded in a topping sheet according to a predetermined pattern in order to produce the radial tire according to the present invention. At this time, the pattern includes two parameters: a 'rubber gauge ratio' and a 'rubber clearance ratio'. A description will be given later of the rubber gauge ratio and rubber clearance ratio.

Furthermore, the steel cord of the present invention is characterized in that a plurality of ultrafine steel filaments each having a diameter of 0.04 - 0.14 mm are stranded to form a 1+n (n = 4 to 7) structure without a spot contact between the ultrafine steel filaments, so that the steel cord has a diameter of 0.2 - 0.5 mm, a unit weight of 0.8 g/m or less, and a shear strength of 25 - 35 kgf. In this respect, diameters of sheath filaments surrounding one core filament are smaller than that of the core filament.

With respect to this, the reason why the diameters of the steel filaments and the number of the sheath filaments are limited as described above is as follows.

Smaller diameters of the steel filaments bring about higher fatigue resistance and flexibility of the steel filament, and thus, it is preferable to reduce the diameter of the steel filament in order to improve important physical properties, such as fatigue resistance and flexibility, of the tire carcass. However, when the diameter of the steel filament is smaller than 0.04 mm, even though fatigue resistance is improved, shear strength of the tire carcass is reduced to lower durability and to undesirably lengthen a processing time of the steel filament, leading to increased production costs and the reduced productivity.

On the other hand, when the diameter of the steel filament is larger than 0.14 mm, it is difficult to strand the ultrafine steel filaments to produce the steel cord with the diameter of 0.5 mm or less, and a weight of the steel cord is increased to increase the weight of the radial tire. As well, a side part of the radial tire is repeatedly flexed and extended to reduce the fatigue resistance of the steel cord, and thus, the steel cord becomes unsuitable to be used as a reinforcing material of the carcass for the passenger car.

Furthermore, when the number of the sheath filaments surrounding the single core filament applied to the steel cord is three or less in the course of stranding a plurality of ultrafine steel filaments each having the diameter of 0.04 - 0.14 mm, the diameter of each steel filament must be increased so as to give the steel cord desired tensile strength. Accordingly, the fatigue resistance of the steel cord is reduced and the weight reduction of the tire is hindered. On the other hand, when the number of the sheath filaments surrounding the single core filament,is more than seven, the diameter of the core filament is relatively increased to reduce the fatigue resistance of the core filament. Thereby, the durability of the radial tire is reduced and flexion strength of the steel cord is undesirably increased, leading to the reduction of the driving comfort.

At this time, it is preferable that the diameter of each sheath filament is smaller than that of the core filament in order to enable the rubber to desirably come into contact with the steel cord, having a 1+n structure in which the steel filaments come into contact with each other in a line contact manner instead of a spot contact manner, so as to improve an attachment force between the steel cord and the rubber. In case that the core filament is a twisted flat strip, the diameter of the core filament may be increased without increasing the unit weight of the core filament, thereby increasing possibility of the rubber to desirably come into contact with the steel cord.

Furthermore, it is preferable that the shear strength of the steel cord be 25 - 35 kgf so as to improve physical properties of the steel cord while reducing a weight of the steel cord. Thereby, a thickness of the topping sheet is reduced to lower a weight of the radial tire. For example, when the shear strength of the steel cord is less than 25 kgf, the durability of the steel cord is reduced. In this regard, the diameter of the steel cord must be undesirably increased in order to prevent the durability of the steel cord from being reduced. On the other hand, when the shear strength of the steel cord is more than 35 kgf, fragility of the steel cord is increased, leading to the rapid reduction of resistance to flexion and extension of the steel cord.

Accordingly, it is preferable that the steel cord is made of steel containing 0.8 - 1.6 wt% carbon in order to produce the steel cord with a shear strength of 25 - 35 kgf. When the carbon content is less than 0.8 wt%, the desired shear strength is not gained. On the other hand, when the carbon content is more than 1.6 wt%, the fragility of the steel cord is increased even though the desired shear strength is gained, thus rapidly reducing the fatigue resistance of the steel cord due to the flexion and extension of the steel cord.

The radial tire for the passenger car according to the present invention includes the carcass having the steel cord with the diameter of 0.2 - 0.5 mm. Hereinafter, a detailed description will be given of the radial tire including the carcass.

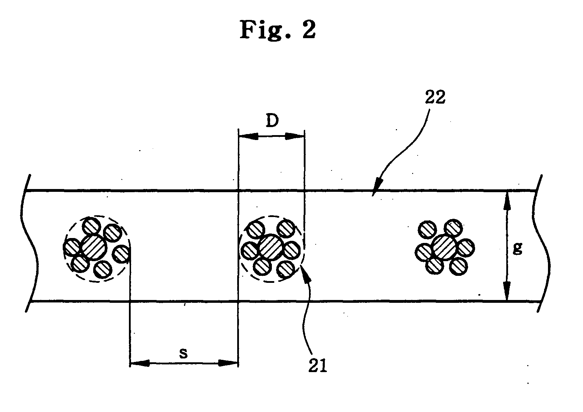

Referring to FIG. 2, a plurality of steel cords 21 of the present invention are embedded at regular intervals in the topping sheet 22 in such a way that the steel cords 21 are positioned at the vertical center of the topping sheet 22. At this time, the topping sheet 22 consists of two sheets attached to each other. In this respect, the rubber gauge ratio (g/D) is 200 - 500 %, which is defined as a ratio of a thickness (g) of a rubber constituting the topping sheet 22 to the diameter (D) of each steel cord 21. Additionally, the rubber clearance ratio (s/D) is 60 - 250 %, which is defined as a ratio of an interval (s) between the adjacent steel cords 21 to the diameter (D) of each steel cord 21.

In this respect, the rubber gauge ratio and rubber clearance ratio are critical factors affecting the embedment of the steel cords in the topping sheet to control physical properties of the carcass. When the rubber gauge ratio is less than 200 %, a thickness of the rubber surrounding the steel cords is very low to reduce the attachment force between the steel cords and rubber, thereby reducing the durability of the carcass. On the other hand, when the rubber gauge ratio is more than 500 %, interface areas between the steel cords and rubber are excessively increased due to intrinsic creep property of the rubber in driving, and thus, the interfaces are weakened. Hence, the steel cords are easily separated from the rubber, and the weight reduction of the radial tire cannot be accomplished because a large amount of rubber is used to produce the radial tire.

As well, when the rubber clearance ratio is less than 60 %, the interval between the adjacent steel cords is narrowed, leading to the easy separation of steel cords from the rubber although an arrangement of the steel cords becomes slightly nonuniform. Furthermore, flexion strength of the carcass is undesirably increased to reduce driving comfort. On the other hand, when the rubber clearance ratio is more than 250 %, the interval between the adjacent steel cords is broadened, and thus, the carcass is insufficiently reinforced. Particularly, an inner liner attached to an inner surface of the carcass and directly coming into contact with air in the radial tire is easily inserted into the carcass to increase an amount of air flowing into the carcass. Accordingly, the radial tire is easily torn and the driving comfort is reduced.

Having generally described this invention, a further understanding can be obtained by reference to example which is provided herein for the purposes of illustration only and are not intended to be limiting unless otherwise specified.

### EXAMPLE

6 sheath filaments each having a diameter of 0.12 mm were stranded in such a way that the sheath filaments spirally surrounded one core filament with a diameter of 0.13 mm to produce a steel cord with a diameter of 0.37 mm according to the present invention. In other words, the sheath filaments were situated on a cradle of a double stranding machine, in which the sheath filaments are stranded at inside and outside thereof twice, and then stranded so as to spirally surround around the core filament according to a double stranding process. In this regard, the sheath filaments were produced by drawing high-carbon steel, containing 0.86 % C, as a rod filament, and the core filament was produced by drawing the same high-carbon steel as in the case of the sheath filaments. Additionally, the stranding was conducted such that a strand pitch of 6 mm was achieved.

A conventional radial tire for a passenger car (255/40 R17) was compared to a radial tire according to the present invention, and the results are described in the Table 1. In this regard, the conventional radial tire included two belts, having the steel cord, as a belt layer and two pieces of carcass ply, having a rayon artificial synthetic fiber cord, as a carcass. However, the radial tire according to the present invention included one piece of carcass ply in which the steel cord having a 1X0.13+6X0.12(6S) structure was embedded.

**TABLE 1**

| | | Unit | Co.Ex. | Ex. |
|---|---|---|---|---|
| Cord for reinforcing | Material | | Rayon | High-carbon steel |
| carcass | Structure | | 1650 D/2P | 1X0.13+6X0.12 |
| | Diameter(D) | mm | 0.68 | 0.37 |
| | Shear strength | Kg | 14 | 25 |
| Tire | Interval between cords (s) | mm | 0.336 | 0.656 |
| | Rubber clearance ratio | % | 49.4 | 177.3 |
| | Thickness of topping sheet (g) | mm | 1.2 | 1.0 |
| | Rubber gauge ratio | % | 176.5 | 270.3 |
| | Carcass ply | piece | 2 | 1 |
| | Carcass thickness | mm | 2.4 | 1.0 |
| | ¹EPI | ply/in | 24 | 24 |
| | ²Durability(ECE R-30) | Hr:min | 1:05 | 1:58 |
| | Weight | Kg/ply | 11.55 | 10.95 |
| | Controlling stability | | 5.5 | 6.5 |
| | ³Rotation resistance | % | 100 | 82 |
| | ⁴RRO(radial run-out) | mm | 1.2 | 0.8 |

| | | | | |
|---|---|---|---|---|
| ¹EPI (ends per inch): the number of cords embedded in the topping sheet per unit inch of the topping sheet | | | | |
| ²Durability(ECE R-30): a time required until the radial tire is damaged under an YR speed condition (340 m/hr) | | | | |
| ³Rotation resistance: rotation resistance is measured under conditions of air pressure of 2.0 kgf/cm² and a driving speed of 80 km/hr | | | | |
| ⁴RRO (radial run-out): RRO is estimated using a deviation from roundness | | | | |

From the Table 1, it can be seen that the radial tire of the present invention has a much higher rubber gauge ratio than the conventional radial tire. Accordingly, a weight of the radial tire of the present invention is reduced by 5 % or more in comparison with the conventional radial tire even though the steel cord of the radial tire of the present invention is heavier than the rayon artificial synthetic fiber cord of the conventional radial tire. Furthermore, durability and controlling stability of the radial tire according to the present invention are relatively high.

Moreover, two pieces of carcass ply having the steel cord according to the present invention may be used to give tires for vehicles other than passenger cars, and improve a run flat performance, which is defined as an ability to drive at a predetermined speed for a predetermined time when the tire is punctured.

As apparent from the above description, the present invention provides a steel cord for a passenger car, which has improved physical properties, such as shear strength and durability even though it is heavier than a conventional synthetic fiber cord. In this regard, a thickness of a carcass including the steel cord is reduced, leading to the reduction of a weight of a tire. Additionally, the steel cord of the present invention is advantageous in that durability of the tire is improved without reducing driving comfort, thereby saving costs of maintenance of the passenger car.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A steel cord having ultrafine steel filaments to reinforce a tire carcass, which has a 1+n (n is 2 to 9) structure including a plurality of steel filaments stranded with each other, comprising:
one core filament with a diameter of 0.04 - 0.14 mm; and
4 to 7 sheath filaments, each having a diameter of 0.04 - 0.14 mm, spirally stranded around the core filament,
wherein the steel cord has a diameter of 0.2 - 0.5 mm, and the core filament and the sheath filaments are made of the steel filaments.

2. The steel cord as set forth in claim 1, wherein the core filament has the larger diameter than each of the sheath filaments.

3. The steel cord as set forth in claim 1, wherein the steel cord has a shear strength of 25 - 35 kgf.

4. The steel cord as set forth in claim 1, wherein the steel filaments are made of steel containing 0.8 - 1.6 wt% C.

5. A radial tire for a passenger car using a plurality of steel cords having ultrafine steel filaments to reinforce a carcass, comprising:
the carcass comprising:
the steel cords each having a diameter of 0.2 - 0.5 mm; and
a topping sheet,
wherein each of the steel cords has a 1+n (n is 4 to 7) structure including 5 - 8 steel filaments, each having a diameter of 0.04 - 0.14 mm, stranded with each other, and the steel cords are embedded in the topping sheet such that a rubber gauge ratio is 200 - 500 %, which is defined as a ratio of a thickness of a rubber constituting the topping sheet to the diameter of each of the steel cords, and a rubber clearance ratio is 60 - 250 %, which is defined as a ratio of an interval between the adjacent steel cords to the diameter of each of the steel cords.

6. The radial tire as set forth in claim 5, wherein a diameter of a core filament constituting each of the steel cords is larger than that of a sheath filament constituting each of the steel cords.

7. The radial tire as set forth in claim 5, wherein each of the steel cords has a shear strength of 25 -35 kgf.
